# FASCICULE DE BREVET EUROPEEN

(11) **EP 4 355 543 B1**
(45) Date de publication et mention de la délivrance du brevet: **06.08.2025**
(21) Numéro de dépôt: 22735546.8
(22) Date de dépôt: 07.06.2022
(51) Int. Cl.: B29B 11/16, B29D 99/00, F01D 5/28, B29L 31/08

(54) **PREFORME FIBREUSE AVEC RAIDISSEURS FORMES PAR DES COUCHES UNIDIRECTIONNELLES DE FILS**
FASERVORFORMLING MIT VERSTEIFUNGEN AUS UNIDIREKTIONALEN GARNSCHICHTEN
FIBROUS PREFORM WITH STIFFENERS FORMED BY UNIDIRECTIONAL YARN LAYERS

(30) Priorité: 17.06.2021 FR 2106412
(43) Date de publication de la demande: 24.04.2024
(60) Demande divisionnaire: 25177778.5
(73) Titulaire: SAFRAN AIRCRAFT ENGINES, 75015 Paris (FR)
(72) Inventeur: IGLESIAS CANO, Celia, 77550 Moissy-Cramayel (FR); LAUWICK, Lucas Antoine Christophe, 77550 Moissy-Cramayel (FR)
(74) Mandataire: Cabinet Beau de Loménie
(86) Numéro de dépôt international: PCT/FR2022/051077
(87) Numéro de publication internationale: WO 2022/263743

(56) Documents cités:
- EP-A1- 3 078 647
- EP-A1- 3 798 418
- EP-A2- 2 781 694
- WO-A1-2013/079860
- WO-A1-91/15357

## Description

### Domaine Technique

La présente invention concerne une préforme fibreuse destinée à former un renfort d'une aube de turbomachine et munie dans un volume intérieur d'un ou plusieurs raidisseurs fibreux formés par une ou plusieurs couches unidirectionnelles de fils, qui permettent d'amortir les modes vibratoires en fonctionnement. L'invention vise également un procédé de fabrication d'une aube de turbomachine comprenant la formation d'une matrice dans une porosité de la préforme fibreuse.

### Technique antérieure

Les pièces d'aéronef sont communément réalisées en matériau composite, comprenant un renfort fibreux et une matrice présente dans la porosité de ce renfort, dans un objectif de réduction de la masse tout en conservant de bonnes propriétés mécaniques. Le renfort fibreux peut être obtenu par tissage tridimensionnel ou encore par empilement de strates de tissu bidimensionnel. On connait en particulier US 2013017093 qui décrit une pale d'hélice d'aéronef comprenant un renfort fibreux comprenant deux portions fibreuses formant un profil aérodynamique et définissant entre elles un volume intérieur dans lequel un insert de conformation de plus faible densité est présent. Cette solution permet de réduire davantage encore la masse tout en conservant des propriétés mécaniques satisfaisantes. La problématique de réduction de la masse et de conservation des propriétés mécaniques par passage au matériau composite se pose, en particulier, pour les aubes de turbomachine, en particulier les aubes directrices de sortie ou redresseurs de flux (« Outlet Guide Vane » ; « OGV ») qui subissent des charges mécaniques conséquentes en fonctionnement. On connait EP 2781694 qui divulgue une aube en matériau composite.

Il est souhaitable de fournir des aubes de turbomachine en matériau composite ayant une masse réduite tout en présentant une tenue mécanique optimisée, notamment vis-à-vis des sollicitations vibratoires s'exerçant sur la pièce en fonctionnement.

### Exposé de l'invention

L'invention concerne une préforme fibreuse d'aube de turbomachine comprenant deux portions fibreuses formant un profil aérodynamique de l'aube et définissant entre elles un volume intérieur,
dans laquelle chaque portion fibreuse présente au moins un raidisseur fibreux d'amortissement des vibrations comprenant une ou plusieurs couches unidirectionnelles de fils qui est présent dans le volume intérieur.

Pour des raisons de concision, l'expression « raidisseur fibreux d'amortissement des vibrations » sera désignée dans la suite par « raidisseur fibreux ».

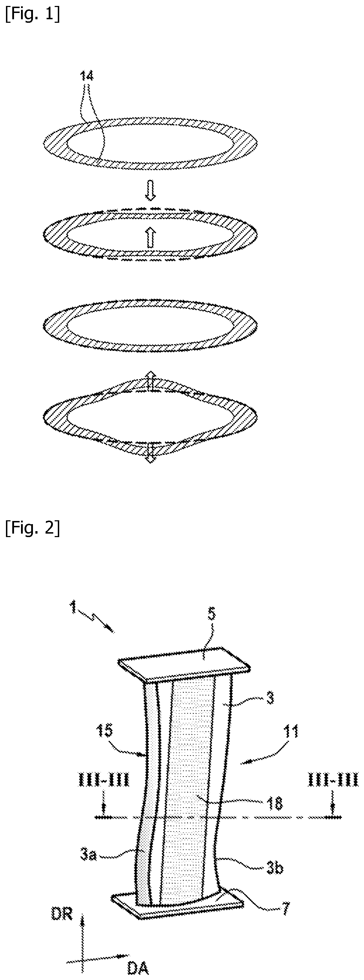

Les sollicitations vibratoires en fonctionnement de la turbomachine peuvent induire des modes indésirables au sein d'une aube en fonctionnement. A ce titre, la figure 1 illustre, à quatre instants successifs représentés de haut en bas, le déplacement des portions fibreuses 14 formant le profil aérodynamique d'une aube directrice de sortie en matériau composite sous l'effet de vibrations rencontrée en fonctionnement. Les portions fibreuses 14 vibrent en opposition de phase avec modification de la distance entre ces portions 14 ce qui a été identifié par les inventeurs comme pouvant endommager la pièce et / ou impacter négativement les performances du moteur, par la modification géométrique des profils aérodynamiques liées aux modifications des déformées modales dans la plage de fonctionnement. Afin de répondre à ce problème, l'invention propose l'incorporation de raidisseurs fibreux qui permettent de s'opposer à la mise en vibration des portions fibreuses en opposition de phase et à leur déplacement relatif et de coupler leurs mouvements, notamment au niveau des ventres vibratoires. L'emploi de couches unidirectionnelles de fils permet de conférer la raideur recherchée pour significativement amortir les modes vibratoires problématiques en fonctionnement, tout en limitant les perturbations de la définition textile des portions fibreuses afin de réduire le risque que les raidisseurs ne conduisent à des modifications textiles non maîtrisées pouvant aboutir à une fragilisation du matériau.

Dans un exemple de réalisation, ledit au moins un raidisseur fibreux s'étend le long d'une direction radiale de la préforme.

En variante, ledit au moins un raidisseur fibreux s'étend le long d'une direction axiale de la préforme. On notera que l'on ne sort pas du cadre de l'invention si la préforme fibreuse présente un raidisseur fibreux s'étendant le long de la direction radiale, et un autre raidisseur fibreux s'étendant le long de la direction axiale.

Dans un exemple de réalisation, les portions fibreuses sont formées par tissage tridimensionnel.

En particulier, ledit au moins un raidisseur fibreux peut être présent sur une zone de déliaison sur laquelle la ou les couches unidirectionnelles de fils sont séparées de la portion fibreuse correspondante, et les fils de cette ou ces couches unidirectionnelles peuvent être tissés avec la portion fibreuse correspondante en dehors de la zone de déliaison.

Une telle caractéristique participe avantageusement à optimiser la raideur en flexion de l'aube, ce qui est particulièrement d'intérêt pour certaines applications, telles qu'une aube directrice de sortie.

En variante, ledit au moins un raidisseur fibreux est rapporté sur chaque portion fibreuse.

Dans un exemple de réalisation, ledit au moins un raidisseur fibreux s'étend au travers du volume intérieur d'une portion fibreuse à l'autre portion fibreuse.

Une telle caractéristique participe à améliorer davantage encore l'amortissement des modes vibratoires problématiques en fonctionnement tels que les modes propres de membranes.

Dans un exemple de réalisation, chaque portion fibreuse présente au moins deux raidisseurs fibreux d'amortissement des vibrations comprenant chacun une ou plusieurs couches unidirectionnelles de fils et qui sont présents dans des régions distinctes du volume intérieur.

Une telle caractéristique participe à améliorer davantage encore l'amortissement des modes vibratoires problématiques en fonctionnement.

En particulier, chaque portion fibreuse peut présenter un premier raidisseur fibreux s'étendant le long de la direction radiale et présent dans une région délimitée par les plans d'équation X1 = 0,15*C et X2 = 0,45*C, et un deuxième raidisseur fibreux s'étendant le long de la direction radiale et présent dans une région délimitée par les plans d'équation X3 = 0,50*C et X4 = 0,80*C, où C désigne la corde de la préforme de l'aube et les coordonnées X1, X2, X3 et X4 étant mesurées le long de la direction axiale en prenant comme origine le bord d'attaque.

Un tel exemple constitue un premier exemple d'agencement particulier permettant d'optimiser l'amortissement des modes vibratoires problématiques en fonctionnement.

En particulier, chaque portion fibreuse peut présenter un premier raidisseur fibreux s'étendant le long de la direction radiale et présent dans une région délimitée par les plans d'équation X5 = 0,10*C et X6 = 0,40*C, un deuxième raidisseur fibreux s'étendant le long de la direction radiale et présent dans une région délimitée par les plans d'équation X7 = 0,35*C et X8 = 0,65*C, et un troisième raidisseur fibreux s'étendant le long de la direction radiale et présent dans une région délimitée par les plans d'équation X9 = 0,60*C et X10 = 0,90*C, où C désigne la corde de la préforme de l'aube et les coordonnées X5, X6, X7, X8, X9 et X10 étant mesurées le long de la direction axiale en prenant comme origine le bord d'attaque.

Un tel exemple constitue un deuxième exemple d'agencement particulier permettant d'optimiser l'amortissement des modes vibratoires problématiques en fonctionnement.

Les deux exemples d'agencement décrits plus haut sont applicables à des géométries d'aube variées, en particulier que celles-ci soit mobile ou fixe. On peut néanmoins privilégier le premier agencement pour des aubes de longueur de corde réduite.

Dans un exemple de réalisation, la préforme fibreuse est une préforme d'une aube directrice de sortie.

L'invention vise également une aube de turbomachine comprenant une préforme fibreuse telle que décrite plus haut, et une matrice présente dans une porosité de la préforme fibreuse.

L'aube peut être une aube de turbomachine d'aéronef.

L'invention vise également une turbomachine comprenant une aube de turbomachine décrite plus haut. La turbomachine peut être une turbomachine d'aéronef.

L'invention vise également un procédé de fabrication d'une aube de turbomachine en matériau composite, comprenant au moins :
- la formation d'une préforme fibreuse telle que décrite plus haut, et
- la formation d'une matrice dans une porosité de la préforme fibreuse.

Dans un exemple de réalisation, un insert de conformation en matériau fugitif est présent dans le volume intérieur de la préforme, et le procédé comprend, après la formation de la matrice, l'élimination de l'insert de conformation.

Dans ce cas, on obtient une aube en matériau composite qui est creuse, ayant un volume intérieur vide. On ne sort, bien entendu, pas du cadre de l'invention si l'insert de conformation n'est pas destiné à être éliminé mais à rester dans l'aube, par exemple de sorte à alléger sa masse par rapport à une pièce monolithique sans volume intérieur.

### Brève description des dessins

[Fig. 1] La figure 1 représente, de manière schématique, des déplacements en opposition de phase de portions fibreuses d'une aube directrice de sortie hors invention pour un mode vibratoire en fonctionnement, à quatre instants successifs (de haut en bas).
[Fig. 2] La figure 2 représente, de manière schématique et partielle, un exemple d'aube directrice de sortie selon l'invention.
[Fig. 3] La figure 3 représente, de manière schématique, une section de l'aube de la figure 2 selon III-III.
[Fig. 3A] La figure 3A représente, de manière schématique et partielle, l'extension des raidisseurs fibreux présents dans l'aube des figures 2 et 3 le long de la hauteur.
[Fig. 4] La figure 4 représente, de manière schématique, une section d'une variante d'aube directrice de sortie selon l'invention.
[Fig. 5] La figure 5 représente, de manière schématique, un détail de l'aube de la figure 4 montrant un exemple d'agencement des couches unidirectionnelles de fils du raidisseur fibreux par rapport aux portions fibreuses.
[Fig. 6] La figure 6 représente, de manière schématique, une variante de la figure 5 montrant un autre exemple d'agencement des couches unidirectionnelles de fils du raidisseur fibreux par rapport aux portions fibreuses.
[Fig. 7] La figure 7 représente, de manière schématique, une variante de l'aube de la figure 4 avec des raidisseurs fibreux traversant le volume intérieur et s'étendant d'une portion fibreuse à l'autre portion fibreuse.
[Fig. 8] La figure 8 représente, de manière schématique et partielle, une variante d'aube directrice de sortie selon l'invention.
[Fig. 9] La figure 9 représente, de manière schématique, une autre variante d'aube directrice de sortie selon l'invention.
[Fig. 10] La figure 10 représente, de manière schématique, un exemple d'ordinogramme de procédé de fabrication d'une pièce selon l'invention.

### Description des modes de réalisation

L'invention va être décrite dans la suite et dans les dessins annexés en application sur une aube directrice de sortie. L'invention s'applique néanmoins à d'autres exemples d'aubes de turbomachine, comme une aube de soufflante, une aube de compresseur ou une aube de turbine. On notera en particulier que l'invention peut s'appliquer à une aube de turbomachine statique comme à une aube de turbomachine mobile, par exemple rotative.

La suite fournit également une description de l'invention s'appliquant au cas d'une préforme fibreuse formée par tissage tridimensionnel mais on ne sort pas du cadre de l'invention lorsque la préforme est obtenue par d'autres techniques, par exemple par empilement de strates de tissu bidimensionnel ou de couches unidirectionnelles.

La figure 2 représente un exemple d'aube 1 directrice de sortie selon l'invention.

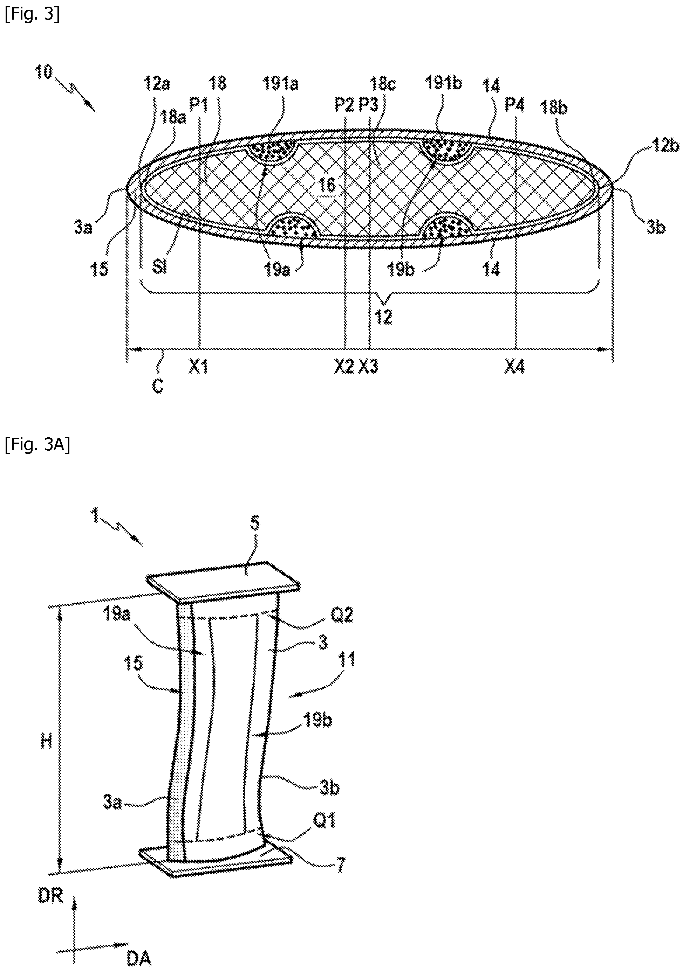

Cette aube 1 est une pièce de turbomachine statique qui permet de « redresser » le flux à la sortie de la soufflante dans le flux secondaire. L'aube 1 comprend un profil aérodynamique 3, apte à orienter le flux vers l'aval de la turbomachine, et des plateformes 5 et 7 qui délimitent une veine d'écoulement du flux. Le profil 3 s'étend entre un bord d'attaque 3a et un bord de fuite 3b le long d'une direction axiale DA. Le bord d'attaque 3a est situé du côté amont et le bord de fuite 3b du côté aval. Les plateformes 5 et 7 sont espacées le long d'une direction radiale DR. Le profil 3 présente en section transversale par rapport à la direction radiale DR une forme incurvée d'épaisseur variable entre son bord d'attaque 3a et son bord de fuite 3b, comme représenté schématiquement à la figure 3.

L'aube 1 est en matériau composite et comprend une préforme fibreuse 10 obtenue par tissage tridimensionnel qui est densifiée par une matrice présente dans la porosité de celle-ci. La préforme fibreuse 10 de la pièce de turbomachine 1 correspond au renfort fibreux 10 de celle-ci et définit le profil aérodynamique. La préforme fibreuse 10 est à la forme de l'aube 1 et est formée par tissage tridimensionnel de premiers et deuxièmes fils, dans l'exemple illustré. La formation de la préforme fibreuse 10 comprend initialement la formation d'une ébauche fibreuse par tissage tridimensionnel au moyen d'un métier à tisser de type Jacquard sur lequel on a disposé un faisceau de fils de trame en une pluralité de couches, les fils de trame étant reliés par des fils de chaîne. Par « tissage tridimensionnel » ou « tissage 3D », on entend ici un tissu dans lequel certains au moins des fils de chaîne lient des fils de trame sur plusieurs couches de trame. On notera toutefois que, dans le cadre de l'invention, les premiers fils peuvent être les fils de chaîne et les deuxièmes fils les fils de trame ou l'inverse, les rôles entre fils de chaîne et de trame étant interchangeables. La préforme fibreuse peut présenter une armure de tissage « interlock », c'est-à-dire une armure de tissage tridimensionnel dont chaque couche de premiers fils lie plusieurs couches de deuxièmes fils avec tous les fils de la même colonne de premiers fils ayant le même mouvement dans le plan de l'armure. On ne sort pas du cadre de l'invention si une autre armure de tissage tridimensionnel est mise en œuvre pour former la préforme. Le matériau des premiers et deuxièmes fils est choisi en fonction de l'application, les premiers et deuxièmes fils pouvant être en carbone ou en matériau céramique, comme le carbure de silicium ou une céramique oxyde.

Lors du tissage de l'ébauche fibreuse correspondant à la préforme illustrée, une déliaison est réalisée entre deux couches successives de deuxièmes fils sur une zone de déliaison 12. Cette déliaison permet de définir deux portions fibreuses 14 déliées et non tissées entre elles sur la zone de déliaison 12 qui peuvent être écartées l'une de l'autre. Les portions fibreuses 14 définissent entre elles un volume intérieur 16, qui est ici sous la forme d'une poche 16 ou d'une cavité 16. En particulier, dans la zone de déliaison 12, aucune couche de fils d'une portion fibreuse 14 n'est tissée avec une couche de fils d'une autre portion fibreuse 14. Dans la zone de déliaison 12, aucun fil ne relie à la fois par tissage une couche de fils d'une portion fibreuse 14 avec une couche de fils d'une autre portion fibreuse 14. Les portions fibreuses 14 peuvent former des peaux fibreuses, d'épaisseur relativement fine par exemple inférieure ou égale à 10 mm, notamment comprise entre 2 mm et 10 mm. Les portions fibreuses 14 sont chacune obtenues par tissage tridimensionnel dans l'exemple illustré.

La zone de déliaison 12 s'étend ici entre une première extrémité axiale 12a située du côté du bord d'attaque 3a jusqu'à une deuxième extrémité axiale 12b située sur le bord de fuite 3b. La zone de déliaison 12 peut s'étendre sur au moins 50%, par exemple au moins 75%, d'une dimension de la préforme, par exemple de la corde de celle-ci (qui correspond à la distance entre le bord d'attaque 3a et le bord de fuite 3b). Dans l'exemple illustré, la zone de déliaison 12 s'étend sur sensiblement toute la hauteur de la préforme fibreuse 10 mais on ne sort pas du cadre de l'invention si elle ne s'étend que sur une partie seulement de cette hauteur. Le tissage est continu en dehors de la zone de déliaison 12 de sorte à relier les portions fibreuses 14 et former une seule et même pièce de tissu. Le bord d'attaque 3a est ici tissé continument de sorte à relier les deux portions fibreuses 14 par tissage dans une zone tissée 15. Un tel tissage continu au niveau du bord d'attaque 3a est avantageux pour renforcer sa résistance vis-à-vis d'éventuels impacts. Le bord de fuite 3b est également ici tissé continument de sorte à relier les deux portions fibreuses 14 par tissage dans une zone tissée 11. On peut en variante relier les portions fibreuses 14 autrement que par tissage sur le bord de fuite 3b. Dans l'exemple illustré, des déliaisons radiales peuvent également être réalisées de sorte à former le renfort fibreux des plateformes 5 à 7 à partir du renfort fibreux du profil 3.

Le volume intérieur 16 défini par les portions fibreuses 14 est destiné à accueillir l'insert de conformation 18 avant la formation de la matrice. Cet insert 18 confère la forme souhaitée à la préforme fibreuse, et en particulier au profil aérodynamique 3. Dans l'exemple illustré, l'insert de conformation 18 est introduit au travers d'une extrémité radiale de la préforme fibreuse qui appartient à la zone de déliaison 12. Dans la préforme, les portions fibreuses 14 enserrent l'insert de conformation 18. L'insert de conformation 18 est ici illustré comme étant en une seule pièce mais on ne sort pas du cadre de l'invention s'il est constitué de plusieurs éléments distincts. L'insert de conformation 18 peut être réalisé par moulage ou usinage dans un bloc de matériau. L'insert de conformation 18 comporte ici des extrémités 18a et 18b arrondies à la forme respectivement du bord d'attaque 3a et du bord de fuite 3b. L'insert de conformation 18 peut également comprendre une portion médiane 18c entre les extrémités 18a et 18b à la forme d'une partie au moins de l'intrados et de l'extrados de l'aube 1.

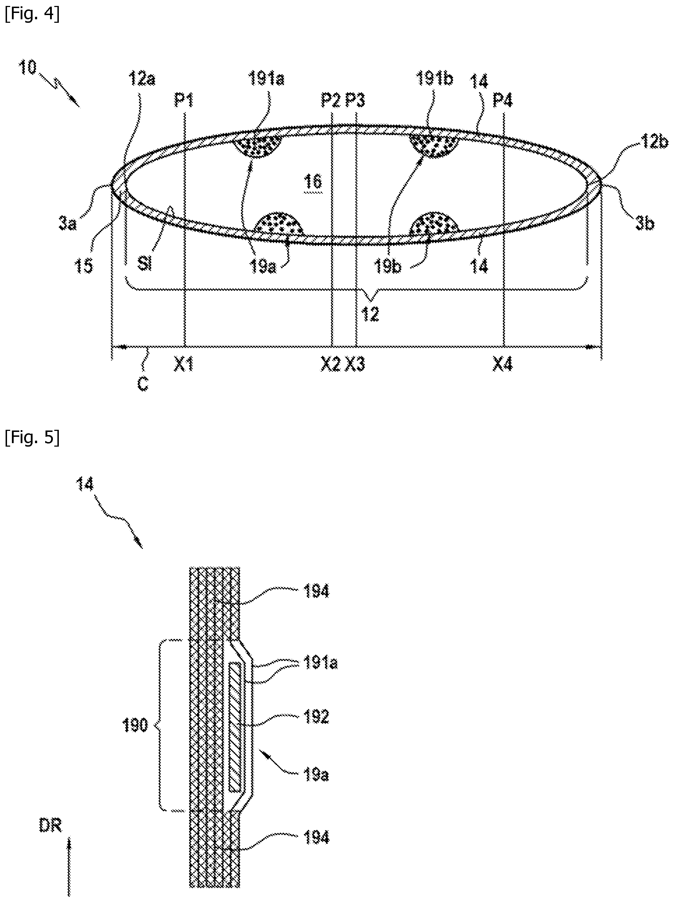

Selon un premier exemple correspondant aux figures 2 et 3, l'aube 1 qui est destinée à être montée dans la turbomachine comprend encore l'insert de conformation 18. Dans ce cas, on choisira avantageusement un insert de conformation 18 de densité plus faible que la densité des portions fibreuses 14 densifiées par la matrice, dans une optique d'allègement de la pièce. L'insert de conformation 18 peut être formé d'un matériau poreux, comme une mousse ou un matériau alvéolaire, par exemple tel que décrit dans le document WO 2011/083250. L'insert de conformation 18 peut être rigide de sorte à ne pas se déformer en fonctionnement. Selon un deuxième exemple correspondant à la figure 4, l'aube destinée à être montée dans la turbomachine est creuse, le volume interne 16 étant vide. Dans ce cas, l'insert de conformation 18 introduit pour former la préforme était amovible ou en matériau fugitif et a été éliminé après densification par la matrice.

Comme indiqué plus haut, des raidisseurs fibreux ont été intégrés à la préforme afin d'améliorer la tenue de l'aube aux sollicitations vibratoires en fonctionnement et augmenter ainsi sa durée de vie. La suite s'attache à décrire des détails relatifs à ces raidisseurs fibreux selon plusieurs exemples de réalisation.

A ce titre les figures 3, 3A et 4 illustrent un premier exemple de raidisseurs fibreux pouvant être utilisés dans le cadre de l'invention. Le cas des figures 3 et 3A ne diffère du cas de la figure 4 qu'en ce que l'insert 18 est ou non présent dans l'aube. Dans l'exemple illustré, chaque portion fibreuse 14 présente deux raidisseurs fibreux 19a-19b qui sont présents dans des régions distinctes du volume intérieur 16. L'invention n'est toutefois pas limitée à ce nombre précis de raidisseurs. Selon une variante, chaque portion fibreuse peut présenter plus de deux raidisseurs fibreux, régulièrement espacés ou non, par exemple au moins trois ou quatre raidisseurs fibreux. En variante, chaque portion fibreuse ne présente qu'un seul raidisseur fibreux.

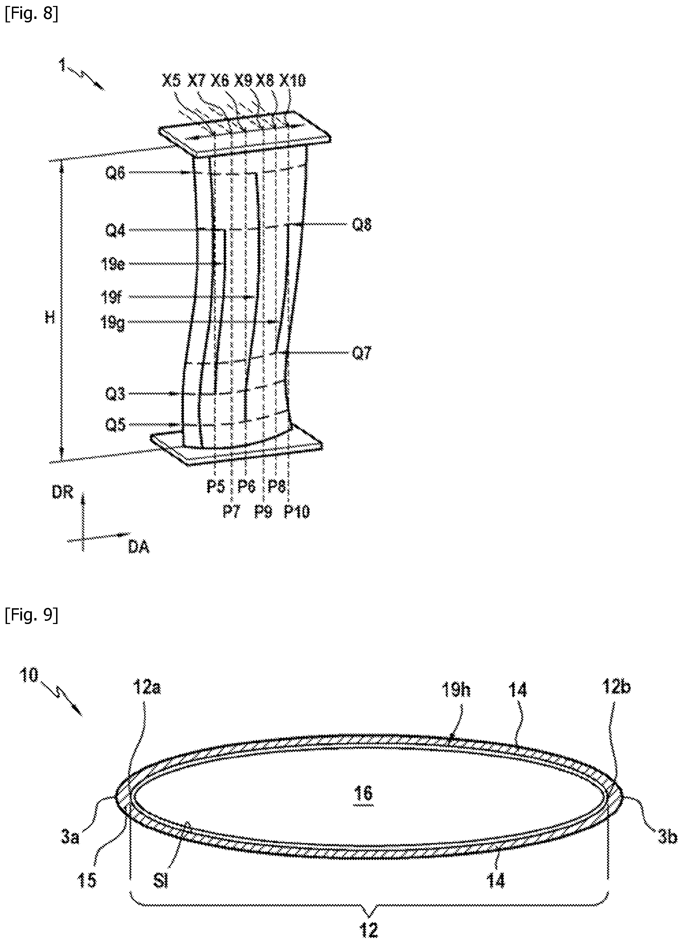

Chaque raidisseur fibreux 19a-19b est formé de plusieurs couches unidirectionnelles de fils 191a-191b, c'est-à-dire par plusieurs couches de fils 191a-191b qui s'étendent sensiblement dans la même direction. On ne sort pas du cadre de l'invention si les raidisseurs fibreux ne comprennent qu'une seule couche unidirectionnelle. Les fils 191a-191b ne sont pas tissés ou liés entre eux dans chaque raidisseur fibreux 19a-19b. Les fils 191a-191b sont présents dans le volume intérieur 16, sur une surface interne SI des portions fibreuses 14 délimitant ce volume intérieur 16. L'exemple illustré concerne le cas de raidisseurs fibreux 19a-19b dont les fils 191a-191b s'étendent le long de la direction radiale DR. Une orientation des couches unidirectionnelles selon la direction axiale DA est également possible et sera abordée dans la suite en lien avec la figure 9. Dans l'exemple des figures 3 et 4, les raidisseurs fibreux 19a-19b forment des reliefs en saillie des portions fibreuses 14 dans le volume intérieur 16. Les fils 191a-191b sont agencés dans chaque raidisseur 19a-19b de sorte à conférer une épaisseur variable à ce dernier avec éventuellement un maximum d'épaisseur positionné dans une région de déplacement relatif maximal des portions fibreuses 14 associé à un mode vibrationnel de l'aube en fonctionnement.

L'homme du métier reconnaîtra que le nombre et le positionnement des raidisseurs 19a-19b est fonction de la pièce et des sollicitations vibratoires rencontrées en fonctionnement et pourra rechercher un compromis entre l'effet d'amortissement recherché et la maîtrise de la masse de l'aube incorporant les raidisseurs.

Afin d'optimiser l'amortissement, il est possible de positionner chaque raidisseur fibreux 19a-19b dans une région comprenant un ventre du mode vibrationnel et délimitée par des plans dont les positions correspondent à des amplitudes de déplacement relatif des portions fibreuses 14 égales à 20% d'une amplitude dudit ventre.

Selon un exemple, chaque portion fibreuse 14 peut présenter (i) un premier raidisseur fibreux 19a présent dans une région délimitée par les plans P1 et P2 respectivement d'équation X1 = 0,15*C et X2 = 0,45*C, et (ii) un deuxième raidisseur fibreux 19b présent dans une région délimitée par les plans P3 et P4 respectivement d'équation X3 = 0,50*C et X4 = 0,80*C, où C désigne la corde de l'aube ou de la préforme de l'aube et les coordonnées X1, X2, X3 et X4 sont mesurées le long de la direction axiale DA en prenant comme origine le bord d'attaque 3a. La majorité (plus de 50%), voire l'intégralité, des fils 191a du premier raidisseur fibreux 19a peut être présente entre les plans P1 et P2. La majorité (plus de 50%), voire l'intégralité, des fils 191b du deuxième raidisseur fibreux 19b peut être présente entre les plans P3 et P4.

On notera que des raidisseurs fibreux présents sur deux portions fibreuses distinctes 14 peuvent être en regard l'un de l'autre (les premiers raidisseurs fibreux 19a sont en regard l'un de l'autre ainsi que les deuxièmes raidisseurs fibreux 19b dans l'exemple illustré). Ces raidisseurs fibreux 19a ou 19b peuvent être présents sur un même plan orthogonal à la direction axiale DA.

Les fils 191a-191b des couches unidirectionnelles (ou les raidisseurs 19a et 19b) peuvent chacun s'étendre sur au moins 50% de la hauteur H de la préforme fibreuse ou de l'aube, voire sur au moins 75% de cette hauteur. Sauf mention contraire, la hauteur de l'aube est mesurée le long de la direction radiale DR.

Selon un exemple et comme illustré à la figure 3A, les fils 191a-191b peuvent s'étendre au moins du plan Q1 au plan Q2 où les plans Q1 et Q2 sont respectivement d'équation Y1 = 0,1*H et Y2 = 0,9*H, avec éventuellement Y1 = 0,05*H et/ou Y2 = 0,95*H, H désignant la hauteur de l'aube ou de la préforme de l'aube et les coordonnées Y1 et Y2 étant mesurées le long de la direction radiale DR en prenant comme origine l'extrémité radiale interne de l'aube ou de la préforme d'aube.

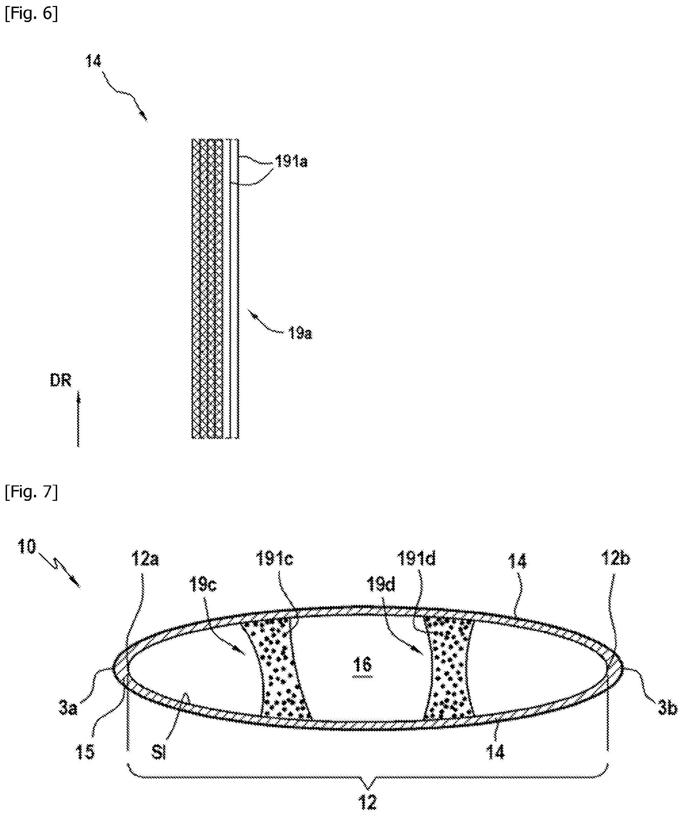

Les figures 5 et 6 qui vont à présent être décrites montrent deux variantes d'intégration des raidisseurs fibreux 19a-19b au textile de la préforme fibreuse de l'aube. Ces variantes s'appliquent, de manière équivalente, quelles que soient le nombre ou la position des raidisseurs. Dans l'exemple illustré à la figure 5, les fils 191a peuvent être co-tissés avec les portions fibreuses 14 dans les zones tissées 194 et séparés de ces dernières dans une zone de déliaison 190. La zone de déliaison 190 est située entre les zones tissées 194. Les zones tissées 194 peuvent former une seule et même pièce de tissu. La déliaison 190 est ici réalisée le long de la direction radiale DR mais le même principe reste applicable au cas de raidisseurs s'étendant le long de la direction axiale DA comme décrit plus bas. Ainsi dans l'exemple de la figure 5, la zone de déliaison 190 est réalisée lors du tissage de l'ébauche afin de sortir les fils 191a et former le raidisseur 19a. L'intégration des raidisseurs ne nécessite ainsi pas d'étape supplémentaire après tissage. Dans ce cas, on peut positionner un insert 192 pour le maintien en place des fils 191a durant la formation de la matrice lequel peut être avantageusement en matériau fugitif afin d'être éliminé après formation de celle-ci. Dans la variante de la figure 6, les fils 191a sont rapportés sur la portion fibreuse 14 correspondante après formation de celle-ci. Ils peuvent être maintenus par collage par exemple ou mécaniquement avant formation de la matrice. Les figures 5 et 6 illustrent le cas des fils 191a du raidisseur 19a mais demeurent, bien entendu, applicables quel que soit le raidisseur, et en particulier pour le raidisseur 19b.

Les exemples qui viennent d'être décrits, en lien avec les figures 3 à 6, concernent des raidisseurs fibreux 19a-19b qui ne s'étendent pas d'une portion fibreuse 14 à une autre. La figure 7 illustre une variante dans laquelle les raidisseurs fibreux 19c et 19d comprenant des couches unidirectionnelles de fils 191c-191d s'étendant au travers du volume intérieur 16 d'une portion fibreuse 14 à l'autre portion fibreuse 14. L'homme du métier privilégiera l'emploi d'un raidisseur traversant tel que celui de la figure 7 ou non traversant comme illustré aux figures 3 et 4 en fonction du compromis recherché entre l'amortissement des vibrations et la maîtrise de la masse de l'aube. L'emploi de raidisseurs traversant 19c et 19d peut être privilégié pour des aubes de grande taille, comme des aubes de soufflante. Pour des géométries d'aube plus petites, des raidisseurs non traversant du type de ceux illustrés aux figures 3 et 4 peuvent être privilégiés. La figure 7 illustre un cas sans insert de conformation 18 mais, selon une variante non illustrée, un insert de conformation en plusieurs parties peut être présent dans le volume intérieur 16.

On vient de décrire, en lien avec les figures 3 à 7, des exemples dans lesquels chaque portion fibreuse 14 présente deux raidisseurs fibreux. L'exemple de la figure 8 qui va à présent être décrit concerne une variante dans laquelle chaque portion fibreuse 14 présente trois raidisseurs fibreux.

Dans l'exemple de la figure 8, chaque portion fibreuse 14 présente trois raidisseurs fibreux 19e, 19f et 19g qui peuvent chacun avoir une structure telle que décrite plus haut. Selon un exemple, chaque portion fibreuse 14 peut présenter (i) un premier raidisseur fibreux 19e présent dans une région délimitée par les plans P5 et P6 respectivement d'équation X5 = 0,10*C et X6 = 0,40*C, (ii) un deuxième raidisseur fibreux 19f présent dans une région délimitée par les plans P7 et P8 respectivement d'équation X7 = 0,35*C et X8 = 0,65*C, et (iii) un troisième raidisseur fibreux 19g présent dans une région délimitée par les plans P9 et P10 respectivement d'équation X9 = 0,60*C et X10 = 0,90*C, où C désigne la corde de l'aube ou de la préforme de l'aube. Les coordonnées X5, X6, X7, X8, X9 et X10 sont mesurées le long de la direction axiale DA en prenant comme origine le bord d'attaque 3a.

Selon un exemple, les caractéristiques suivantes peuvent également être vérifiées :
- les fils de la ou des couches unidirectionnelles du premier raidisseur 19e peuvent s'étendre au moins du plan Q3 au plan Q4 où les plans Q3 et Q4 sont respectivement d'équation Y3 = 0,2*H et Y4 = 0,7*H, avec éventuellement Y3 pouvant varier entre 0,00*H et 0,40*H et/ou Y4 pouvant varier entre 0,50*H et 0,90*H,
- les fils de la ou des couches unidirectionnelles du deuxième raidisseur 19f peuvent s'étendre au moins du plan Q5 au plan Q6 où les plans Q5 et Q6 sont respectivement d'équation Y5 = 0,1*H et Y6 = 0,9*H, avec éventuellement Y5 pouvant varier entre 0,05*H et 0,1*H et/ou Y6 pouvant varier entre 0,90*H et 0,95*H, et
- les fils de la ou des couches unidirectionnelles du troisième raidisseur 19g peuvent s'étendre au moins du plan Q7 au plan Q8 où les plans Q7 et Q8 sont respectivement d'équation Y7 = 0,3*H et Y8 = 0,7*H, avec éventuellement Y7 pouvant varier entre 0,10*H et 0,50*H, et/ou Y8 pouvant varier entre 0,50*H et 0,90*H,
où H désigne la hauteur de l'aube ou de la préforme de l'aube et les coordonnées Y3, Y4, Y5, Y6, Y7 et Y8 sont mesurées le long de la direction radiale DR en prenant comme origine l'extrémité radiale interne de l'aube ou de la préforme d'aube.

On a représenté sur la figure 9 le cas d'un raidisseur fibreux 19h s'étendant le long de la direction axiale DA de la préforme. De manière analogue à ce qui a été décrit plus haut, on peut avoir plusieurs raidisseurs fibreux s'étendant le long de la direction axiale DA et disposés à différentes hauteurs de la préforme d'aube. Afin d'optimiser l'amortissement, chaque portion fibreuse 14 peut présenter au moins un raidisseur fibreux 19h présent dans une région délimitée par les plans P5 et P6 définis plus haut et/ou au moins un raidisseur fibreux 19h présent dans une région délimitée par les plans P7 et P8 définis plus haut et/ou au moins un raidisseur fibreux 19h présent dans une région délimitée par les plans P9 et P10 définis plus haut. En variante, chaque portion fibreuse 14 peut présenter au moins un raidisseur fibreux 19h présent dans une région délimitée par les plans P1 et P2 définis plus haut et/ou au moins un raidisseur fibreux 19h présent dans une région délimitée par les plans P3 et P4 définis plus haut. Les raidisseurs fibreux 19e peuvent s'étendre sur plus de 50% de la corde de l'aube ou de la préforme, comme illustré.

On vient de décrire différentes structures possibles pour des aubes et préformes d'aubes selon l'invention. La suite s'attache à décrire des détails relatifs au procédé de fabrication de l'aube pouvant être mis en œuvre dans le cadre de l'invention.

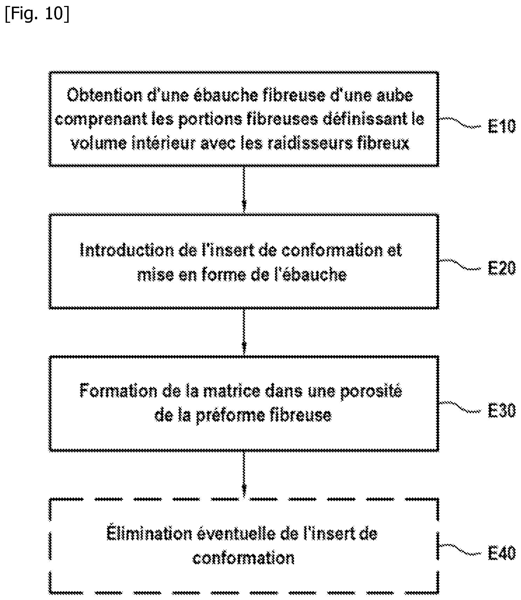

La figure 10 est un ordinogramme d'un exemple de procédé selon l'invention. Dans une première étape E10 une ébauche fibreuse de l'aube est obtenue. L'ébauche peut être obtenue par tissage tridimensionnel ou par empilement de strates de tissu bidimensionnel ou de couches unidirectionnelles. L'ébauche comprend les raidisseurs fibreux décrits plus haut. Comme indiqué plus haut, ces raidisseurs peuvent être formés lors du tissage de l'ébauche en effectuant une sortie de fils 191a sur une zone de déliaison 190 (exemple de la figure 5) ou être intégrés après l'obtention de l'ébauche en les rapportant sur les portions fibreuses (exemple de la figure 6). L'ébauche est ensuite mise en forme avec introduction de l'insert de conformation 18 dans le volume intérieur 16 (étape E20). Les portions fibreuses 14 enserrent l'insert de conformation 18 et prennent sa forme pour définir le profil aérodynamique. L'insert de conformation 18 peut être destiné à être éliminé après formation de la matrice afin d'obtenir une aube creuse, ou être présent dans l'aube destinée à être montée dans la turbomachine. Une fois l'ébauche mise en forme et l'insert de conformation 18 introduit, la matrice est formée dans la porosité de celle-ci par une méthode connue en soi (étape E30). Par exemple, dans le cas où la pièce est en composite à matrice organique, la formation de la matrice peut comprendre l'injection d'une résine dans la porosité de la préforme et la cuisson, par exemple la réticulation de celle-ci, de sorte à former la matrice. La matrice est formée dans la porosité des portions fibreuses 14 ainsi qu'autour des fils 191a-191d des couches unidirectionnelles et dans les espaces inter-fils 191a-191d. On ne sort pas du cadre de l'invention lorsque la matrice n'est pas en matériau organique mais en matériau céramique, par exemple dans le cas où l'aube est destinée à être montée en partie chaude d'une turbomachine, par exemple dans le cas d'une aube de turbine. Dans ce cas, la matrice céramique peut être formée par infiltration chimique en phase vapeur (« Chemical Vapor Infiltration » ; « CVI »), infiltration à l'état fondu (« Melt-Infiltration » ; « MI ») ou par imprégnation et pyrolyse de polymère (« Polymer Impregnation and Pyrolysis » ; « PIP »). Les techniques de formation de la matrice sont connues en soi et ne nécessitent pas d'être davantage détaillées.

Après formation de la matrice, on peut éliminer l'insert de conformation 18 si cela est souhaité par exemple par fusion ou dissolution par un solvant (étape optionnelle E40), ou simplement retirer l'insert. On réalise également, si cela est souhaité, après formation de la matrice un usinage ou des traitements de finition afin d'obtenir l'aube prête à être montée dans la turbomachine.

L'expression « comprise entre ... et ... » doit se comprendre comme incluant les bornes.

## Revendications

1. Préforme fibreuse (10) d'aube (1) de turbomachine comprenant deux portions fibreuses (14) formées par tissage tridimensionnel et formant un profil aérodynamique de l'aube et définissant entre elles un volume intérieur (16),
dans laquelle chaque portion fibreuse présente au moins un raidisseur fibreux (19a-19h) d'amortissement des vibrations comprenant une ou plusieurs couches unidirectionnelles de fils (191a-191d) qui est présent dans le volume intérieur, et
dans laquelle ledit au moins un raidisseur fibreux est présent sur une zone de déliaison (190) sur laquelle la ou les couches unidirectionnelles de fils sont séparées de la portion fibreuse correspondante, et dans laquelle les fils de cette ou ces couches unidirectionnelles sont tissés avec la portion fibreuse correspondante en dehors de la zone de déliaison, ou dans laquelle ledit au moins un raidisseur fibreux est rapporté sur chaque portion fibreuse.

2. Préforme fibreuse (10) selon la revendication 1, dans laquelle ledit au moins un raidisseur fibreux (19a-19g) s'étend le long d'une direction radiale (DR) de la préforme.

3. Préforme fibreuse (10) selon la revendication 1, dans laquelle ledit au moins un raidisseur fibreux (19h) s'étend le long d'une direction axiale (DA) de la préforme.

4. Préforme fibreuse (10) selon l'une quelconque des revendications 1 à 3, dans laquelle ledit au moins un raidisseur fibreux (19c ; 19d) s'étend au travers du volume intérieur (16) d'une portion fibreuse (14) à l'autre portion fibreuse (14).

5. Préforme fibreuse (10) selon l'une quelconque des revendications 1 à 4, dans laquelle chaque portion fibreuse (14) présente au moins deux raidisseurs fibreux (19a-19g) d'amortissement des vibrations comprenant chacun une ou plusieurs couches unidirectionnelles de fils (191a-191d) et qui sont présents dans des régions distinctes du volume intérieur.

6. Préforme fibreuse (10) selon la revendication 5, dans laquelle chaque portion fibreuse (14) présente un premier raidisseur fibreux (19a ; 19c) s'étendant le long de la direction radiale (DR) et présent dans une région délimitée par les plans (P1 ; P2) d'équation X1 = 0,15*C et X2 = 0,45*C, et un deuxième raidisseur fibreux (19b ; 19d) s'étendant le long de la direction radiale et présent dans une région délimitée par les plans (P3 ; P4) d'équation X3 = 0,50*C et X4 = 0,80*C, où C désigne la corde de la préforme de l'aube et les coordonnées X1, X2, X3 et X4 étant mesurées le long de la direction axiale (DA) en prenant comme origine le bord d'attaque (3a).

7. Préforme fibreuse (10) selon la revendication 5, dans laquelle chaque portion fibreuse (14) présente un premier raidisseur fibreux (19e) s'étendant le long de la direction radiale (DR) et présent dans une région délimitée par les plans (P5 ; P6) d'équation X5 = 0,10*C et X6 = 0,40*C, un deuxième raidisseur fibreux (19f) s'étendant le long de la direction radiale et présent dans une région délimitée par les plans (P7 ; P8) d'équation X7 = 0,35*C et X8 = 0,65*C, et un troisième raidisseur fibreux (19g) s'étendant le long de la direction radiale et présent dans une région délimitée par les plans (P9 ; P10) d'équation X9 = 0,60*C et X10 = 0,90*C, où C désigne la corde de la préforme de l'aube et les coordonnées X5, X6, X7, X8, X9 et X10 étant mesurées le long de la direction axiale (DA) en prenant comme origine le bord d'attaque (3a).

8. Préforme fibreuse (10) selon l'une quelconque des revendications 1 à 7, dans laquelle la préforme fibreuse est une préforme d'une aube directrice de sortie (1).

9. Aube de turbomachine comprenant une préforme fibreuse selon l'une quelconque des revendications 1 à 8, et une matrice présente dans une porosité de la préforme fibreuse.

10. Procédé de fabrication d'une aube de turbomachine (1) en matériau composite, comprenant au moins :
- la formation d'une préforme fibreuse (10) selon l'une quelconque des revendications 1 à 8, et
- la formation d'une matrice dans une porosité de la préforme fibreuse.

11. Procédé selon la revendication 10, dans lequel un insert de conformation (18) en matériau fugitif est présent dans le volume intérieur de la préforme, et le procédé comprenant, après la formation de la matrice, l'élimination de l'insert de conformation.

## Patentansprüche

1. Faservorform (10) für eine Schaufel (1) einer Turbomaschine, umfassend zwei Faserabschnitte (14), die durch dreidimensionale Verwebung gebildet werden und ein aerodynamisches Profil der Schaufel bilden und zwischen sich ein Innenvolumen (16) definieren, wobei jeder Faserabschnitt zumindest eine Faserversteifung (19a - 19h) zur Dämpfung von Schwingungen aufweist, die eine oder mehrere unidirektionale Faserschichten (191a-191d) umfasst, die in dem Innenvolumen vorliegen, und wobei die zumindest eine Faserversteifung auf einer bindungslosen Zone (190) vorliegt, auf welcher die unidirektionale(n) Faserschicht(en) von dem entsprechenden Faserabschnitt getrennt ist/sind, und wobei die Fäden dieser unidirektionalen Schicht(en) mit dem entsprechenden Faserabschnitt außerhalb der bindungslosen Zone verwebt sind, oder wobei die zumindest eine Faserversteifung an jedem Faserabschnitt angebracht ist.

2. Faservorform (10) nach Anspruch 1, wobei die zumindest eine Faserversteifung (19a-19g) sich entlang einer radialen Richtung (DR) der Vorform erstreckt.

3. Faservorform (10) nach Anspruch 1, wobei die zumindest eine Faserversteifung (19h) sich entlang einer axialen Richtung (DA) der Vorform erstreckt.

4. Faservorform (10) nach einem der Ansprüche 1 bis 3, wobei die zumindest eine Faserversteifung (19c; 19d) sich durch das Innenvolumen (16) von einem Faserabschnitt (14) zu dem anderen Faserabschnitt (14) erstreckt.

5. Faservorform (10) nach einem der Ansprüche 1 bis 4, wobei jeder Faserabschnitt (14) zumindest zwei Faserversteifungen (19a-19g) zur Dämpfung von Schwingungen aufweist, die jeweils eine oder mehrere unidirektionale Faserschichten (191a-191d) umfassen und die in unterschiedlichen Bereichen des Innenvolumens vorliegen.

6. Faservorform (10) nach Anspruch 5, wobei jeder Faserabschnitt (14) eine erste Faserversteifung (19a; 19c), die sich entlang der radialen Richtung (DR) erstreckt und in einem Bereich vorliegt, der durch die Ebenen (P1; P2) der Gleichung X1 = 0,15*C und X2 = 0,45*C begrenzt wird, und eine zweite Faserversteifung (19b; 19d) aufweist, die sich entlang der radialen Richtung erstreckt und in einem Bereich vorliegt, der durch die Ebenen (P3; P4) der Gleichung X3 = 0,50*C und X4 = 0,80*C begrenzt wird, wobei C die Sehne der Vorform der Schaufel bezeichnet und die Koordinaten X1, X2, X3 und X4 entlang der axialen Richtung (DA) gemessen werden, wobei die Vorderkante (3a) als Ursprung genommen wird.

7. Faservorform (10) nach Anspruch 5, wobei jeder Faserabschnitt (14) eine erste Faserversteifung (19e), die sich entlang der radialen Richtung (DR) erstreckt und in einem Bereich vorliegt, der durch die Ebenen (P5; P6) der Gleichung X5 = 0,10*C und X6 = 0,40*C begrenzt wird, eine zweite Faserversteifung (19f), die sich entlang der radialen Richtung erstreckt und in einem Bereich vorliegt, der durch die Ebenen (P7; P8) der Gleichung X7 = 0,35*C und X8 = 0,65*C begrenzt wird, und eine dritte Faserversteifung (19g) aufweist, die sich entlang der radialen Richtung erstreckt und in einem Bereich vorliegt, der durch die Ebenen (P9; P10) der Gleichung X9 = 0,60*C und X10 = 0,90*C begrenzt wird, wobei C die Sehne der Vorform der Schaufel bezeichnet und die Koordinaten X5, X6, X7, X8, X9 und X10 entlang der axialen Richtung (DA) gemessen werden, wobei die Vorderkante (3a) als Ursprung genommen wird.

8. Faservorform (10) nach einem der Ansprüche 1 bis 7, wobei die Faservorform eine Vorform einer Austritts-Leitschaufel (1) ist.

9. Turbomaschinenschaufel, umfassend eine Faservorform nach einem der Ansprüche 1 bis 8, und eine Matrix die in einer Porosität der Faservorform vorliegt.

10. Verfahren zur Herstellung einer Schaufel (1) aus Verbundmaterial für eine Turbomaschine, umfassend zumindest:
- die Bildung einer Faservorform (10) nach einem der Ansprüche 1 bis 8, und
- die Bildung einer Matrix in einer Porosität der Faservorform.

11. Verfahren nach Anspruch 10, wobei ein Formgebungseinsatz (18) aus einem flüchtigen Material in dem Innenvolumen der Vorform vorliegt, und das Verfahren die Entfernung des Formgebungseinsatzes nach der Bildung der Matrix umfasst.

## Claims

1. A fibrous preform (10) of a turbomachine vane or blade (1) comprising two fibrous portions (14) formed by three-dimensional weaving and forming an aerodynamic profile of the vane or blade and defining therebetween an interior volume (16),
wherein each fibrous portion has at least one fibrous vibration damping stiffener (19a-19h) comprising one or several unidirectional layers of yarns (191a-191d) and present in the interior volume, and in which said at least one fibrous stiffener is present on a non-interlinked area (190) on which the unidirectional layer(s) of yarns are separated from the corresponding fibrous portion, and wherein the yarns of this or these unidirectional layers are woven with the corresponding fibrous portion outside the non-interlinked area, or wherein said at least one fibrous stiffener is added onto each fibrous portion.

2. The fibrous preform (10) according to claim 1, wherein said at least one fibrous stiffener (19a-19g) extends along a radial direction (DR) of the preform.

3. The fibrous preform (10) according to claim 1, wherein said at least one fibrous stiffener (19h) extends along an axial direction (DA) of the preform.

4. The fibrous preform (10) according to any one of claims 1 to 3, wherein said at least one fibrous stiffener (19c; 19d) extends through the interior volume (16) from one fibrous portion (14) to the other fibrous portion (14).

5. The fibrous preform (10) according to any one of claims 1 to 4, wherein each fibrous portion (14) has at least two fibrous vibration damping stiffeners (19a-19g) each comprising one or several unidirectional layers of yarns (191a-191d) and which are present in distinct regions of the interior volume.

6. The fibrous preform (10) according to claim 5, wherein each fibrous portion (14) has a first fibrous stiffener (19a; 19c) extending along the radial direction (DR) and present in a region delimited by the planes (P1; P2) of equation X1 = 0.15*C and X2 = 0.45*C, and a second fibrous stiffener (19b; 19d) extending along the radial direction and present in a region delimited by the planes (P3; P4) of equation X3 = 0.50*C and X4 = 0.80*C, where C refers to the chord of the vane or blade preform and the coordinates X1, X2, X3 and X4 being measured along the axial direction (DA) by taking the leading edge as the origin (3a).

7. The fibrous preform (10) according to claim 5, wherein each fibrous portion (14) has a first fibrous stiffener (19e) extending along the radial direction (DR) and present in a region delimited by the planes (P5; P6) of equation X5 = 0.10*C and X6 = 0.40*C, a second fibrous stiffener (19f) extending along the radial direction and present in a region delimited by the planes (P7; P8) of equation X7 = 0.35*C and X8 = 0.65*C; and a third fibrous stiffener (19g) extending along the radial direction and present in a region delimited by the planes (P9; P10) of equation X9 = 0.60*C and X10 = 0.90*C, where C refers to the chord of the vane or blade preform and the coordinates X5, X6, X7, X8, X9 and X10 being measured along the axial direction (DA) by taking the leading edge (3a) as the origin.

8. The fibrous preform (10) according to any one of claims 1 to 7, wherein the fibrous preform is a preform of an outlet guide vane (1).

9. A turbomachine vane or blade comprising a fibrous preform according to any one of claims 1 to 8, and a matrix present in a porosity of the fibrous preform.

10. A method for manufacturing a turbomachine vane or blade (1) made of composite material, comprising at least:
- the formation of a fibrous preform (10) according to any one of claims 1 to 8, and
- the formation of a matrix in a porosity of the fibrous preform.

11. The method according to claim 10, wherein a conformation insert (18) made of fugitive material is present in the interior volume of the preform, and the method comprising, after the formation of the matrix, the elimination of the conformation insert.
